# EUROPEAN PATENT APPLICATION

(11) **EP 2 860 723 A1**
(43) Date of publication of application: **15.04.2015**
(21) Application number: 13801250.5
(22) Date of filing: 08.04.2013
(51) Int. Cl.: G09G 5/00, G06F 3/048, G09G 5/36, H04N 7/173

(54) **TERMINAL APPARATUS, DISPLAY APPARATUS, AND DISPLAY SYSTEM**

(30) Priority: 06.06.2012 JP 2012128503
(71) Applicant: Funai Electric Co., Ltd., Daito-shi Osaka 574-0013 (JP)
(72) Inventor: HIGASHI, Norihiro, Daito-shi Osaka 574-0013 (JP); ETO, Kentaro, Daito-shi Osaka 574-0013 (JP); TSUKAMOTO, Keisuke, Daito-shi Osaka 574-0013 (JP); NISHIMURA, Keita, Daito-shi Osaka 574-0013 (JP); ISHIHARA, Hidetoshi, Daito-shi Osaka 574-0013 (JP)
(74) Representative: Grünecker Patent- und Rechtsanwälte PartG mbB
(86) International application number: PCT/JP2013/060605
(87) International publication number: WO 2013/183351

(57) **Abstract**

This information terminal (1) includes a terminal display portion (12) and a control portion (11) performing control of transmitting an image signal configured to display an image on an external display device (2). The control portion is configured to perform control of acquiring information about the posture of the external display device and transmitting the image signal of the image according to the posture of the external display device to the external display device on the basis of the information about the posture which has been acquired.

## Description

### Technical Field

The present invention relates to a terminal device, a display device, and a display system, and more particularly, it relates to a terminal device, a display device, and a display system each including a display portion.

### Background Art

In general, a terminal device including a display portion is known. Such a terminal device is disclosed in Japanese Patent Laying-Open No. 6-187120, for example.

In the aforementioned Japanese Patent Laying-Open No. 6-187120, there is disclosed a multimedia communication terminal (terminal device) including a display portion (terminal display portion). This multimedia communication terminal is configured to be capable of changing the posture of the display portion and to transmit an image signal of an image according to the change of the posture of the display portion to an external display device. Furthermore, the multimedia communication terminal is configured to change the posture of the external display device in conjunction with the change of the posture of the display portion of the multimedia communication terminal itself.

### Prior Art

### Patent Document

Patent Document 1: Japanese Patent Laying-Open No. 6-187120

### Summary of the Invention

### Problem to be Solved by the Invention

However, the multimedia communication terminal (terminal device) according to the aforementioned Japanese Patent Laying-Open No. 6-187120 is configured to transmit the image signal of the image according to the change of the posture of the display portion (terminal display portion) of the multimedia communication terminal itself to the external display device and change the posture of the external display device in conjunction with the change of the posture of the display portion of the multimedia communication terminal itself, and hence the aspect ratio of an image according to the posture of the display portion of the multimedia communication terminal itself may not be suitable for the posture of the external display device when the posture of the external display device is changed directly. In this case, the external display device needs to adjust the received image signal to the aspect ratio of an image suitable for the posture of the external display device, and hence there is such a problem that the resolution of an image displayed on the display device is reduced due to the image adjustment.

The present invention has been proposed in order to solve the aforementioned problem, and an object of the present invention is to provide a terminal device, a display device, and a display system each cable of the suppressing a reduction in the resolution of an image displayed on the display device.

### Means for Solving the Problem

A terminal device according to a first aspect of the present invention includes a terminal display portion and a control portion performing control of transmitting an image signal configured to display an image on an external display device, and the control portion is configured to perform control of acquiring information about the posture of the external display device and transmitting the image signal of the image according to the posture of the external display device to the external display device on the basis of the information about the posture which has been acquired.

As hereinabove described, the terminal device according to the first aspect of the present invention is provided with the control portion performing control of acquiring the information about the posture of the external display device and transmitting the image signal of the image according to the posture of the external display device to the external display device on the basis of the information about the posture which has been acquired, whereby an image signal of an image suitable for the posture of the external display device is transmitted to the external display device, and hence the aspect ratio of a displayed image can be properly adjusted. Thus, a reduction in the resolution of the image displayed on the display device can be suppressed.

In the aforementioned terminal device according to the first aspect, the control portion is preferably configured to perform control of transmitting the image signal of the image rotated according to the rotation posture of the external display device to the external display device. According to this structure, when the aspect ratio of display is changed by the rotation of the external display device, an image signal of an image according to the change of the aspect ratio of display is transmitted to the external display device, and hence the aspect ratio of the displayed image is properly adjusted, whereby the reduction in the resolution of the image displayed on the display device can be easily suppressed.

The aforementioned terminal device according to the first aspect preferably further includes a terminal posture detecting portion detecting a posture, and the control portion is preferably configured to perform control of transmitting the image signal of the image according to the posture of the terminal device and the posture of the external display device to the external display device on the basis of the detection result of the terminal posture detecting portion and the information about the posture of the external display device which has been acquired. According to this structure, the image signal of the image according to both the posture of the terminal device and the posture of the external display device is transmitted to the external display device, and hence the image according to the posture of the terminal device can be displayed on the external display device while the reduction in the resolution of the image displayed on the display device is suppressed.

In this case, the terminal posture detecting portion preferably includes an acceleration sensor. According to this structure, the posture of the terminal device can be easily detected by the acceleration sensor.

The aforementioned terminal device according to the first aspect preferably further includes a communication portion capable of transmitting the image signal to the external display device and capable of receiving a data signal containing the information about the posture from the external display device. According to this structure, the information about the posture is acquired from the external display device through the communication portion, whereby the image signal of the image suitable for the posture of the external display device can be easily transmitted to the external display device.

In this case, the communication portion is preferably configured to be capable of transmitting and receiving the data signal containing the information about the posture and the image signal in the form of a signal of MHL (Mobile High-Definition Link) standards. According to this structure, the information about the posture can be easily acquired from the external display device in the form of the signal of the MHL standards allowing transmission of audio data, video data, and a control signal, and the image signal of the image suitable for the posture of the external display device can be easily transmitted to the external display device.

In the aforementioned terminal device according to the first aspect, the control portion is preferably configured to perform control of transmitting the image signal according to the vertically long posture or the horizontally long posture of the external display device to the external display device. According to this structure, the image signal of the image according to the change of the posture is transmitted to the external display device when either the vertically long posture or the horizontally long posture of the external display device is changed to either the horizontally long posture or the vertically long posture of the external display device, and hence the aspect ratio of the displayed image can be easily properly adjusted.

In the aforementioned terminal device according to the first aspect, the control portion is preferably configured to perform control of acquiring the screen resolution of the external display device and transmitting the image signal according to the posture and the screen resolution of the external display device to the external display device on the basis of the information about the posture of the external display device and the screen resolution of the external display device which have been acquired. According to this structure, the image signal according to both the posture and the screen resolution of the external display device is transmitted to the external display device, and hence an image suitable for the posture and the screen resolution of the display device can be displayed on the display device.

In the aforementioned terminal device according to the first aspect, the control portion is preferably configured to perform control of synthesizing an adjustment image into an image transmitted to the external display device and transmitting the image signal of the image according to the posture of the external display device to the external display device when the posture of the terminal device and the posture of the external display device are different from each other. According to this structure, the control portion of the terminal device can adjust the image displayed on the external display device even when the posture of the terminal device and the posture of the external display device are different from each other, and hence the processing load on the external display device can be reduced.

The aforementioned terminal device according to the first aspect preferably includes a portable information terminal. According to this structure, an image on the portable information terminal which is portable and small-sized having a terminal display portion can be displayed on the large-sized display device while the reduction in the resolution is suppressed.

A display device according to a second aspect of the present invention includes a display device body portion including a display portion, capable of changing a posture and a notification portion notifying an external terminal device of information about the posture of the display device body portion in order for the external terminal device to transmit an image signal of an image according to the posture of the display device body portion.

As hereinabove described, the display device according to the second aspect of the present invention is provided with the notification portion notifying the external terminal device of the information about the posture of the display device body portion in order for the external terminal device to transmit the image signal of the image according to the posture of the display device body portion, whereby an image signal of an image suitable for the posture of the display device body portion can be transmitted from the external terminal device, and hence the aspect ratio of a displayed image can be properly adjusted. Thus, the display device capable of suppressing a reduction in the resolution of the image displayed on the display device can be provided.

In the aforementioned display device according to the second aspect, the notification portion is preferably configured to transmit the information about the posture according to the rotation posture of the display device body portion to the external terminal device. According to this structure, when the aspect ratio of display is changed by the rotation of the display device body portion, an image signal of an image according to the change of the aspect ratio of display is transmitted from the external terminal device, and hence the aspect ratio of the displayed image is properly adjusted, whereby the reduction in the resolution of the image displayed on the display device can be easily suppressed.

The aforementioned display device according to the second aspect preferably further includes a posture detecting portion detecting the posture of the display device body portion, and the notification portion is preferably configured to transmit the information about the posture to the external terminal device on the basis of the detection result of the posture detecting portion. According to this structure, the posture of the display device body portion can be easily detected, and the information about the posture can be transmitted to the external terminal device.

In this case, the display device body portion is preferably configured to be rotatable to be vertically long and horizontally long, and the posture detecting portion preferably includes a rotation detecting switch detecting the rotational position of the display device body portion. According to this structure, the vertically long posture and the horizontally long posture of the display device body portion can be easily detected by the rotation detecting switch having a relatively simple structure.

The aforementioned display device according to the second aspect preferably further includes a display device communication portion capable of receiving the image signal of the image according to the posture of the display device body portion from the external terminal device. According to this structure, the image signal of the image suitable for the posture of the display device body portion can be easily received from the external terminal device through the display device communication portion.

A display system according to a third aspect of the present invention includes a terminal device and a display device, the display device includes a display device body portion having a display portion, capable of changing a posture and a notification portion notifying the terminal device of information about the posture of the display device body portion, and the terminal device includes a terminal display portion and a control portion performing control of transmitting an image signal of an image according to the posture of the display device body portion to the display device on the basis of the information about the posture of the display device body portion which has been acquired by notification from the display device.

As hereinabove described, the display system according to the third aspect of the present invention is provided with the control portion performing control of transmitting the image signal of the image according to the posture of the display device body portion to the display device on the basis of the information about the posture of the display device body portion which has been acquired by the notification from the display device, whereby an image signal of an image suitable for the posture of the display device body portion is transmitted from the terminal device to the display device, and hence the aspect ratio of a displayed image can be properly adjusted. Thus, the display system capable of suppressing a reduction in the resolution of the image displayed on the display device can be provided.

In the aforementioned display system according to the third aspect, the control portion is preferably configured to perform control of transmitting the image signal of the image rotated according to the rotation posture of the display device body portion to the display device. According to this structure, when the aspect ratio of display is changed by the rotation of the display device body portion, an image signal of an image according to the change of the aspect ratio of display is transmitted to the display device, and hence the aspect ratio of the displayed image is properly adjusted, whereby the reduction in the resolution of the image displayed on the display device can be easily suppressed.

In the aforementioned display system according to the third aspect, the terminal device preferably further includes a terminal posture detecting portion detecting a posture, and the control portion is preferably configured to perform control of transmitting the image signal of the image according to the posture of the terminal device and the posture of the display device body portion to the display device on the basis of the detection result of the terminal posture detecting portion and the information about the posture of the display device body portion which has been acquired. According to this structure, the image signal of the image according to both the posture of the terminal device and the posture of the display device body portion is transmitted to the display device, and hence the image according to the posture of the terminal device can be displayed on the display device while the reduction in the resolution of the image displayed on the display device is suppressed.

In the aforementioned display system according to the third aspect, the terminal device preferably further includes a communication portion capable of transmitting the image signal to the display device and capable of receiving a data signal containing the information about the posture from the display device. According to this structure, the information about the posture is acquired from the display device through the communication portion, whereby the image signal of the image suitable for the posture of the display device can be easily transmitted to the external display device.

In this case, the communication portion is preferably configured to be capable of transmitting and receiving the data signal containing the information about the posture and the image signal in the form of a signal of MHL (Mobile High-Definition Link) standards. According to this structure, the information about the posture can be easily acquired from the display device in the form of the signal of the MHL standards allowing transmission of audio data, video data, and a control signal, and the image signal of the image suitable for the posture of the display device body portion can be easily transmitted to the display device.

### Effect of the Invention

According to the present invention, as hereinabove described, the reduction in the resolution of the image displayed on the display device can be suppressed.

### Brief Description of the Drawings

[Fig. 1] An overall view schematically showing a display system according to an embodiment of the present invention.
[Fig. 2] A block diagram showing an information terminal according to the embodiment of the present invention.
[Fig. 3] A block diagram showing a display device according to the embodiment of the present invention.
[Fig. 4] A flowchart for illustrating image display processing performed by a control portion of the information terminal and a control portion of the display device according to the embodiment of the present invention.
[Fig. 5] A diagram for illustrating the case where the information terminal is vertically long and the display device is horizontally long according to the embodiment of the present invention.
[Fig. 6] A diagram for illustrating the case where the information terminal is vertically long and the display device is vertically long according to the embodiment of the present invention.
[Fig. 7] A diagram for illustrating the case where the information terminal is horizontally long and the display device is horizontally long according to the embodiment of the present invention.
[Fig. 8] A diagram for illustrating the case where the information terminal is horizontally long and the display device is vertically long according to the embodiment of the present invention.
[Fig. 9] A diagram for illustrating the case where an information terminal is vertically long and a display device is vertically long according to a comparative example of the embodiment of the present invention.

### Modes for Carrying Out the Invention

An embodiment of the present invention is hereinafter described on the basis of the drawings.

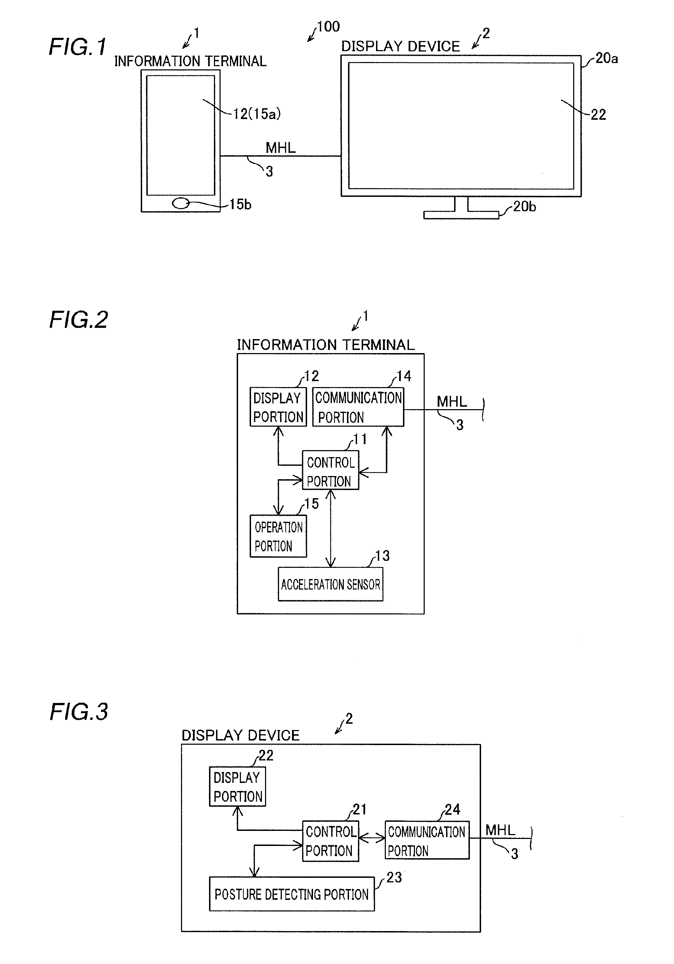

The structure of a display system 100 according to the embodiment of the present invention is now described with reference to Figs. 1 to 3.

The display system 100 includes an information terminal 1 and a display device 2, as shown in Fig. 1. The information terminal 1 and the display device 2 is connected to each other by a cable 3 corresponding to MHL (Mobile High-Definition Link) standards allowing transmission of audio data, video data, and a control signal. Thus, an image output from the information terminal 1 can be displayed on the display device 2. The information terminal 1 is an example of the "terminal device" in the present invention.

The information terminal 1 includes a control portion 11, a display portion 12, an acceleration sensor 13, a communication portion 14, and an operation portion 15, as shown in Fig. 2. The information terminal 1 is configured to be utilized to execute various applications or to be employed for telephone call with telephone communication, viewing of information by connection to the Internet, or the like. The information terminal 1 includes a portable information terminal which is portable. The display portion 12 is an example of the "terminal display portion" in the present invention, and the acceleration sensor 13 is an example of the "terminal posture detecting portion" in the present invention.

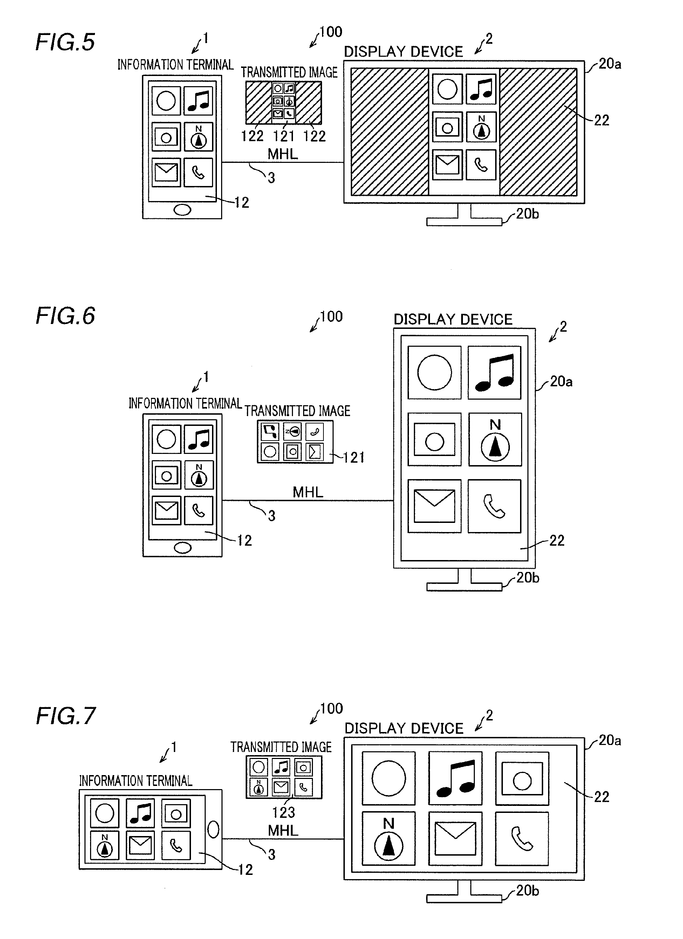

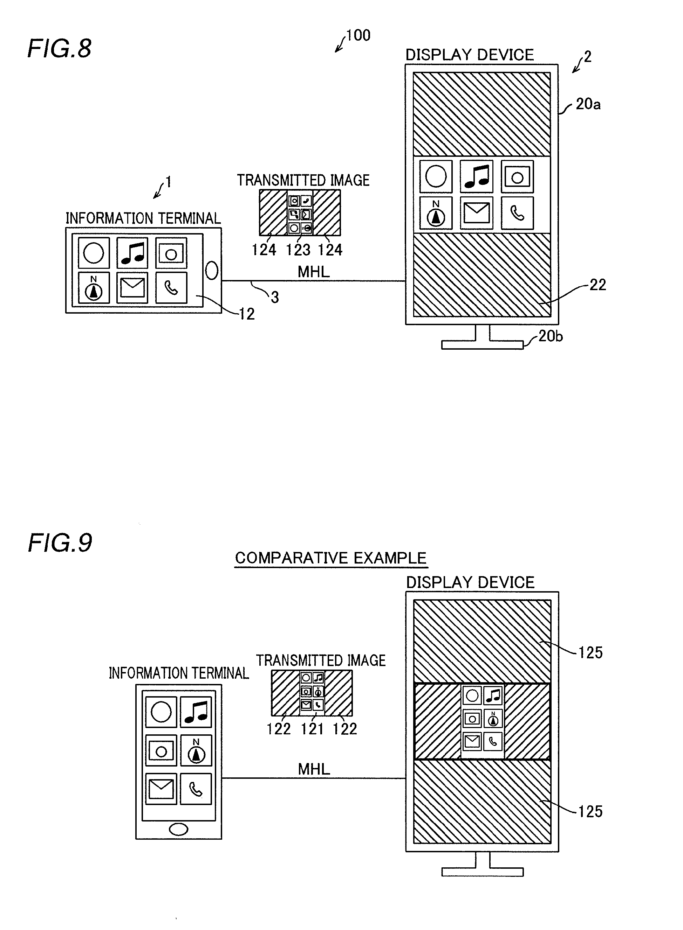

The display device 2 includes a display device body portion 20a and a stand 20b supporting the display device body portion 20a, as shown in Fig. 1. The display device 2 includes a control portion 21, a display portion 22, a posture detecting portion 23, and a communication portion 24, as shown in Fig. 3. The display device 2 is configured to display an image externally input through the communication portion 24 on the display portion 22. The display device body portion 20a is mounted to be rotatable by 90 degrees with respect to the stand 20b. In other words, the display device body portion 20a of the display device 2 is mounted on the stand 20b to be rotatable so that the display portion 22 becomes horizontally long (see Figs. 1, 5, and 7) and vertically long (see Figs. 6 and 8). The control portion 21 is an example of the "notification portion" in the present invention, and the display portion 22 is an example of the "display portion" in the present invention. The communication portion 24 is an example of the "display device communication portion" in the present invention.

The control portion 11 (see Fig. 2) of the information terminal 1 is configured to control each part of the information terminal 1. Specifically, the control portion 11 is configured to perform control of displaying an image on the display portion 12. The control portion 11 is configured to detect the posture and movement of the information terminal 1 by the acceleration sensor 13. The control portion 11 is configured to transmit an image signal for displaying the image on the external display device 2 by controlling the communication portion 14. The control portion 11 is configured to accept an operation from a user through the operation portion 15.

According to this embodiment, the control portion 11 of the information terminal 1 is configured to receive a data signal containing information about the posture of the display device 2 (display device body portion 20a) transmitted from the display device 2 through the communication portion 14 and acquire the information about the posture of the display device 2. Specifically, the control portion 11 is configured to acquire information about the horizontally long posture or the vertically long posture of the display portion 22 of the display device 2 having a screen aspect ratio of 16:9. The control portion 11 is configured to acquire the information about the posture of the display device 2 (display device body portion 20a) through the communication portion 14 by transmission of a control signal of the MHL standards. Furthermore, the control portion 11 is configured to acquire a screen resolution representing the size of a screen of the display portion 22 of the display device 2 through the communication portion 14.

According to this embodiment, the control portion 11 of the information terminal 1 is configured to perform control of transmitting an image signal of an image according to the posture of the display device 2 to the display device 2 on the basis of the acquired information about the posture of the display device 2 (display device body portion 20a). Specifically, the control portion 11 is configured to perform control of transmitting an image signal of an image according to the posture of the information terminal 1 detected by the acceleration sensor 13 and the posture (the vertically long posture or the horizontally long posture) of the display device 2 (display device body portion 20a) acquired by the communication portion 14 to the display device 2.

The control portion 11 is configured to perform control of transmitting an image signal according to the posture and the screen resolution of the display device 2 to the display device 2 on the basis of the acquired information about the posture of the display device 2 and the acquired screen resolution of the display device 2. Furthermore, the control portion 11 is configured to perform control of synthesizing adjustment images into the image transmitted to the display device 2 and transmitting the image signal of the image according to the posture of the display device 2 (display device body portion 20a) to the display device 2 when the posture of the information terminal 1 and the posture of the display device 2 are different from each other.

For example, the control portion 11 of the information terminal 1 is configured to adjust the aspect ratio (screen aspect ratio) by synthesizing adjustment images 122 into the right and left sides of a vertically long image 121 corresponding to the posture of the information terminal 1 and transmit an image signal of a horizontally long image corresponding to the size (screen resolution) of the display portion 22 of the display device 2 when the information terminal 1 stands so that the posture thereof is vertically long and the posture of the display portion 22 of the display device 2 (display device body portion 20a) is horizontally long, as in an example shown in Fig. 5. In other words, the control portion 11 of the information terminal 1 transmits an image signal of an image whose short-side direction is aligned with the vertical direction of display to the display device 2.

The control portion 11 of the information terminal 1 is configured to transmit to the display device 2 an image signal of an image obtained by rotating the image 121 by 90 degrees in correspondence to the rotation of the vertically long image 121 corresponding to the posture of the information terminal 1 by 90 degrees in the display device 2 when the information terminal 1 stands so that the posture thereof is vertically long and the posture of the display portion 22 of the display device 2 (display device body portion 20a) is vertically long, as in an example shown in Fig. 6. In other words, the control portion 11 of the information terminal 1 is configured to transmit an image signal of an image whose longitudinal direction is aligned with the vertical direction of display to the display device 2.

The control portion 11 of the information terminal 1 is configured to transmit an image signal of a horizontally long image 123 corresponding to the posture of the information terminal 1 when the posture of the information terminal 1 is horizontally long and the posture of the display portion 22 of the display device 2 (display device body portion 20a) is horizontally long, as in an example shown in Fig. 7. In other words, the control portion 11 of the information terminal 1 transmits an image signal of an image whose short-side direction is aligned with the vertical direction of display to the display device 2.

The control portion 11 of the information terminal 1 is configured to transmit to the display device 2 an image signal of an image rotated by 90 degrees according to the posture of the display device 2 after adjusting the aspect ratio (screen aspect ratio) by synthesizing adjustment images 124 into the upper and lower sides of the horizontally long image 123 corresponding to the posture of the information terminal 1 when the posture of the information terminal 1 is horizontally long and the posture of the display portion 22 of the display device 2 (display device body portion 20a) is vertically long, as in an example shown in Fig. 8. In other words, the control portion 11 of the information terminal 1 is configured to transmit an image signal of an image whose longitudinal direction is aligned with the vertical direction of display to the display device 2.

The display portion 12 of the information terminal 1 is configured to be capable of displaying an image. A touch panel 15a serving as the operation portion 15 is integrally provided on the display portion 12. The display portion 12 includes a liquid crystal panel and a backlight. The display portion 12 is configured to be capable of displaying an image for an operation through the touch panel 15a serving as the operation portion 15 of the information terminal 1. The display portion 12 has a pixel count of 1280 pixels in the longitudinal direction and a pixel count of 720 pixels in the short-side direction. The acceleration sensor 13 is configured to detect acceleration acting on the information terminal 1. In other words, the acceleration sensor 13 is configured to detect whether the posture of the information terminal 1 is vertically long or horizontally long.

The communication portion 14 of the information terminal 1 is configured to be capable of being connected with the cable 3 corresponding to the MHL standards. Furthermore, the communication portion 14 is configured to be capable of receiving the data signal containing the information about the posture of the display device 2 (display device body portion 20a) in the form of a signal of the MHL standards. The communication portion 14 is configured to be capable of transmitting the image signal in the form of the signal of the MHL standards to the display device 2. In other words, the communication portion 14 is configured to be capable of transmitting audio data, video data, and a control signal to the external display device 2 through the cable 3. Furthermore, the communication portion 14 is configured to be capable of receiving a control signal from the external display device 2. The operation portion 15 includes the touch panel 15a and an operation button 15b, as shown in Fig. 1. The operation portion 15 is configured to accept the operation from the user.

The control portion 21 (see Fig. 3) of the display device 2 is configured to control each part of the display device 2. Specifically, the control portion 21 is configured to perform control of displaying an image on the display portion 22. The control portion 21 is configured to detect the posture of the display device 2 (display device body portion 20a) by the posture detecting portion 23. The control portion 21 is configured to control the communication portion 24 to transmit a signal notifying the information terminal 1 of the information about the posture of the display device 2 (display device body portion 20a).

According to this embodiment, the control portion 21 of the display device 2 is configured to perform control of notifying the information terminal 1 of the information about the posture of the display device 2 (display device body portion 20a) in order for the information terminal 1 to transmit the image signal of the image according to the posture of the display device 2 (display device body portion 20a). Specifically, the control portion 21 is configured to notify the information terminal 1 of the information about the horizontally long posture (see Fig. 5) or the vertically long posture (see Fig. 6) of the display portion 22 of the display device 2 (display device body portion 20a) on the basis of the detection result of the posture detecting portion 23. In other words, the control portion 21 is configured to transmit information about the posture according to the rotation posture of the display device body portion 20a to the information terminal 1. The control portion 21 is configured to notify the information terminal 1 of the information about the posture of the display device 2 (display device body portion 20a) through the communication portion 24 by the transmission of the control signal of the MHL standards. Furthermore, the control portion 21 is configured to notify the information terminal 1 of the screen resolution representing the size of the screen of the display portion 22 of the display device 2 through the communication portion 24.

The display portion 22 of the display device 2 is configured to be capable of displaying an image. The display portion 22 includes a liquid crystal panel and a backlight. The display portion 22 has a pixel count of 1920 pixels in the longitudinal direction and a pixel count of 1080 pixels in the short-side direction. The posture detecting portion 23 is configured to detect the posture of the display device 2 (display device body portion 20a). In other words, the posture detecting portion 23 is configured to detect whether the posture of the display device 2 (display device body portion 20a) is vertically long or horizontally long. The posture detecting portion 23 includes a rotation detecting switch detecting rotation of the display device body portion 20a with respect to the stand 20b.

The communication portion 24 of the display device 2 is configured to be capable of being connected with the cable 3 corresponding to the MHL standards. Furthermore, the communication portion 24 is configured to be capable of receiving the audio data, the video data, and the control signal from the external information terminal 1 through the cable 3. The communication portion 24 is configured to be capable of transmitting the control signal to the external information terminal 1. In addition, the communication portion 24 is configured to be capable of receiving the image signal of the image according to the posture of the display device body portion 20a from the information terminal 1.

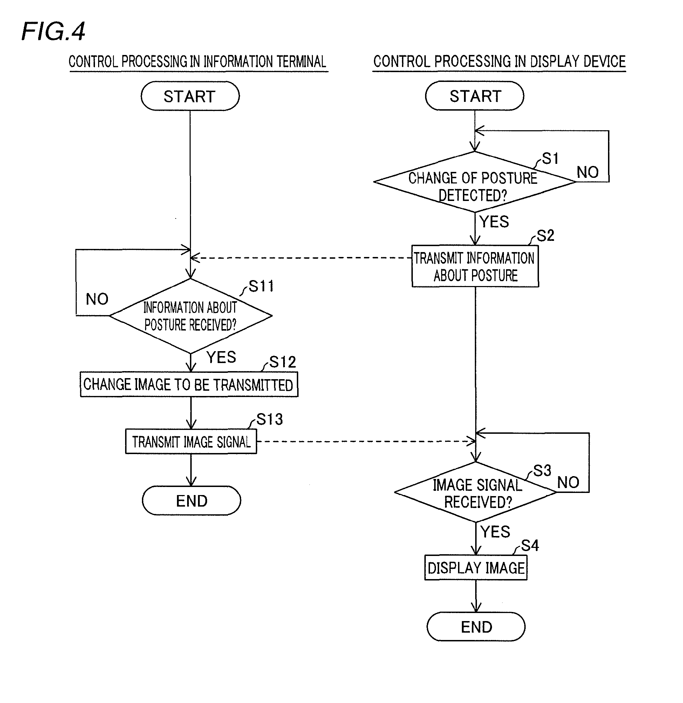

Image display processing performed by the control portion 11 of the information terminal 1 and the control portion 21 of the display device 2 is now described with reference to Fig. 4. This processing is continuously executed when the image of the information terminal 1 is displayed on the display device 2.

At a step S1, the control portion 21 of the display device 2 determines whether or not the posture detecting portion 23 detects a change of the posture of the display device 2 (display device body portion 20a). If the posture detecting portion 23 does not detect the change of the posture of the display device 2 (display device body portion 20a), the control portion 21 of the display device 2 repeats this determination until the posture detecting portion 23 detects the change of the posture of the display device 2 (display device body portion 20a). If the posture detecting portion 23 detects the change of the posture of the display device 2 (display device body portion 20a), the control portion 21 of the display device 2 transmits the information about the posture of the display device 2 (display device body portion 20a) to the information terminal 1 at a step S2. In other words, when the posture of the display device 2 is changed from a vertically long (horizontally long) posture to a horizontally long (vertically long) posture, the control portion 21 of the display device 2 transmits information about the changed horizontally long (vertically long) posture to the information terminal 1.

In parallel with the control performed by the control portion 21 of the display device 2, the control portion 11 of the information terminal 1 determines whether or not the information about the posture of the display device 2 (display device body portion 20a) has been received from the display device 2 at a step S11. If the information about the posture of the display device 2 (display device body portion 20a) has not been received, the control portion 11 of the information terminal 1 repeats this determination until the information about the posture of the display device 2 (display device body portion 20a) has been received. If the information about the posture of the display device 2 (display device body portion 20a) has been received, the control portion 11 of the information terminal 1 changes an image to be transmitted at a step S12. Specifically, the control portion 11 of the information terminal 1 changes the image to be transmitted to the display device 2 by rotating the image according to the posture of the display device 2 (display device body portion 20a) or synthesizing the adjustment images. The control portion 11 of the information terminal 1 transmits an image signal of the changed image to the display device 2 at a step S13 and thereafter terminates the image display processing.

In parallel with the control performed by the control portion 11 of the information terminal 1, the control portion 21 of the display device 2 determines whether or not the changed image signal has been received at a step S3. If the image signal has not been received, the control portion 21 of the display device 2 repeats this determination until the image signal has been received. If the image signal has been received, the control portion 21 of the display device 2 displays an image based on the received image signal on the display portion 22 at a step S4 and thereafter terminates the image display processing.

According to this embodiment, as hereinabove described, the control portion 11 performing control of acquiring the information about the posture of the display device 2 and transmitting the image signal of the image according to the posture of the display device 2 to the display device 2 on the basis of the acquired information about the posture is provided in the information terminal 1, whereby an image signal of an image suitable for the posture of the display device 2 is transmitted to the display device 2, and hence the aspect ratio of a displayed image can be properly adjusted. Thus, a reduction in the resolution of the image displayed on the display device 2 can be suppressed. When an information terminal synthesizes adjustment images 122 into the right and left sides of a vertically long image 121 and transmits an image signal of a horizontally long image on the basis of only the posture of the information terminal and the size (screen resolution) of a screen of a display device, as in a comparative example shown in Fig. 9, on the other hand, the display device further adds and displays adjustment images 125 in the case where the posture of the display device is vertically long. In this case, an effective image which is displayed is unnecessarily reduced in size. Therefore, the resolution of the image displayed on the display device is reduced.

According to this embodiment, as hereinabove described, the control portion 11 of the information terminal 1 is configured to perform control of transmitting the image signal of the image rotated according to the rotation posture of the display device 2 to the display device 2. Thus, when the aspect ratio of display is changed by the rotation of the display device 2, an image signal of an image according to the change of the aspect ratio of display is transmitted to the display device 2, and hence the aspect ratio of the displayed image is properly adjusted, whereby the reduction in the resolution of the image displayed on the display device 2 can be easily suppressed.

According to this embodiment, as hereinabove described, the control portion 11 of the information terminal 1 is configured to perform control of transmitting the image signal of the image according to the posture of the information terminal 1 and the posture of the display device 2 to the display device 2 on the basis of the detection result of the acceleration sensor 13 and the acquired information about the posture of the display device 2. Thus, the image signal of the image according to both the posture of the information terminal 1 and the posture of the display device 2 is transmitted to the display device 2, and hence the image according to the posture of the information terminal 1 can be displayed on the display device 2 while the reduction in the resolution of the image displayed on the display device 2 is suppressed.

According to this embodiment, as hereinabove described, the acceleration sensor 13 serving as the terminal posture detecting portion is provided, whereby the posture of the information terminal 1 can be easily detected by the acceleration sensor.

According to this embodiment, as hereinabove described, the communication portion 14 capable of transmitting the image signal to the display device 2 and capable of receiving the data signal containing the information about the posture from the display device 2 is provided in the information terminal 1. Thus, the information about the posture is acquired from the display device 2 through the communication portion 14, whereby the image signal of the image suitable for the posture of the display device 2 can be easily transmitted to the display device 2.

According to this embodiment, as hereinabove described, the communication portion 14 is configured to be capable of transmitting and receiving the data signal containing the information about the posture of the display device 2 (display device body portion 20a) and the image signal in the form of the signal of the MHL standards, whereby the information about the posture can be easily acquired from the external display device 2 in the form of the signal of the MHL standards allowing the transmission of the audio data, the video data, and the control signal, and the image signal of the image suitable for the posture of the external display device 2 (display device body portion 20a) can be easily transmitted to the external display device 2.

According to this embodiment, as hereinabove described, the control portion 11 of the information terminal 1 is configured to perform control of transmitting the image signal to the display device 2 according to the vertically long posture or the horizontally long posture of the display device 2 (display device body portion 20a). Thus, the image signal of the image according to the change of the posture of display is transmitted to the display device 2 when either the vertically long posture or the horizontally long posture of the display device 2 (display device body portion 20a) is changed to either the horizontally long posture or the vertically long posture of the display device 2 (display device body portion 20a), and hence the aspect ratio of the displayed image can be easily properly adjusted.

According to this embodiment, as hereinabove described, the control portion 11 of the information terminal 1 is configured to perform control of acquiring the screen resolution of the display device 2 and transmitting the image signal according to the posture and the screen resolution of the display device 2 to the display device 2 on the basis of the acquired information about the posture of the display device 2 (display device body portion 20a) and the acquired screen resolution of the display device 2 (display device body portion 20a). Thus, the image signal according to both the posture and the screen resolution of the display device 2 (display device body portion 20a) is transmitted to the display device 2, and hence an image suitable for the posture and the screen resolution of the display device 2 can be displayed on the display device 2.

According to this embodiment, as hereinabove described, the control portion 11 of the information terminal 1 is configured to perform control of synthesizing the adjustment images 122 (124) into the image transmitted to the display device 2 and transmitting the image signal of the image according to the posture of the display device 2 (display device body portion 20a) to the display device 2 when the posture of the information terminal 1 and the posture of the display device 2 (display device body portion 20a) are different from each other. Thus, the control portion 11 of the information terminal 1 can adjust the image displayed on the display device 2 even when the posture of the information terminal 1 and the posture of the display device 2 (display device body portion 20a) are different from each other, and hence the processing load on the display device 2 can be reduced.

According to this embodiment, as hereinabove described, the control portion 21 of the display device 2 is configured to transmit the information about the posture according to the rotation posture of the display device body portion 20a to the information terminal 1. Thus, the image signal of the image according to the change of the aspect ratio of display is transmitted from the information terminal 1 when the aspect ratio of display is changed by the rotation of the display device body portion 20a, and hence the aspect ratio of the displayed image is properly adjusted, whereby the reduction in the resolution of the image displayed on the display device 2 can be easily suppressed.

According to this embodiment, as hereinabove described, the posture detecting portion 23 detecting the posture of the display device body portion 20a is provided in the display device 2, and the control portion 21 of the display device 2 is configured to transmit the information about the posture to the information terminal 1 on the basis of the detection result of the posture detecting portion 23. Thus, the posture of the display device body portion 20a can be easily detected, and the information about the posture can be transmitted to the information terminal 1.

According to this embodiment, as hereinabove described, the display device body portion 20a is configured to be rotatable to be vertically long and horizontally long, and the posture detecting portion 23 includes the rotation detecting switch detecting the rotational position of the display device body portion 20a. Thus, the vertically long posture and the horizontally long posture of the display device body portion 20a can be easily detected by the rotation detecting switch having a relatively simple structure.

According to this embodiment, as hereinabove described, the communication portion 24 capable of receiving the image signal of the image according to the posture of the display device body portion 20a from the information terminal 1 is provided in the display device 2. Thus, the image signal of the image suitable for the posture of the display device body portion 20a can be easily received from the information terminal 1 through the communication portion 24.

The embodiment disclosed this time must be considered as illustrative in all points and not restrictive. The range of the present invention is shown not by the above description of the embodiment but by the scope of claims for patent, and all modifications within the meaning and range equivalent to the scope of claims for patent are further included.

For example, while the example of mounting the display device body portion to be rotatable with respect to the stand has been shown in the aforementioned embodiment, the present invention is not restricted to this. According to the present invention, the display device body portion may not be mounted on the stand so far as the posture of the display device (display device body portion) can be changed.

While the example of connecting the information terminal (terminal device) and the display device to each other by the cable corresponding to the MHL standards has been shown in the aforementioned embodiment, the present invention is not restricted to this. According to the present invention, the terminal device and the display device may be connected to each other by a cable corresponding to standards other than the MHL standards, such as HDMI (High-Definition Multimedia Interface) standards. Alternatively, the terminal device and the display device may be wirelessly connected to each other without a cable.

While the processing operations performed by the control portion are described, using the flowchart described in a flow-driven manner in which processing is performed in order along a processing flow for the convenience of illustration in the aforementioned embodiment, the present invention is not restricted to this. According to the present invention, the processing operations performed by the control portion may be performed in an event-driven manner in which processing is performed on an event basis. In this case, the processing operations performed by the control portion may be performed in a complete event-driven manner or in a combination of an event-driven manner and a flow-driven manner.

While the example in which the information terminal (terminal device) is configured to transmit the image signal of the image according to the posture of the display device has been shown in the aforementioned embodiment, the present invention is not restricted to this. According to the present invention, the display device may be configured to adjust the displayed image on the basis of the image signal transmitted from the terminal device and the information about the posture of the display device. For example, the display device may be configured to rotate and display the image transmitted from the terminal device on the basis of the rotation posture of the display device.

### Reference Numerals

- 1:: information terminal (terminal device)
- 2:: display device
- 11:: control portion
- 12:: display portion (terminal display portion)
- 13:: acceleration sensor (terminal posture detecting portion)
- 14:: communication portion
- 20a:: display device body portion
- 21:: control portion (notification portion)
- 22:: display portion
- 23:: posture detecting portion
- 24:: communication portion (display device communication portion)
- 100:: display system
- 122, 124:: adjustment image

## Claims

1. A terminal device comprising:
a terminal display portion (12); and
a control portion (11) performing control of transmitting an image signal configured to display an image on an external display device (2),
the control portion configured to perform control of acquiring information about a posture of the external display device and transmitting the image signal of the image according to the posture of the external display device to the external display device on the basis of the information about the posture which has been acquired.

2. The terminal device according to claim 1, wherein
the control portion is configured to perform control of transmitting the image signal of the image rotated according to a rotation posture of the external display device to the external display device.

3. The terminal device according to claim 1, further comprising a terminal posture detecting portion (13) detecting a posture, wherein
the control portion is configured to perform control of transmitting the image signal of the image according to the posture of the terminal device and the posture of the external display device to the external display device on the basis of a detection result of the terminal posture detecting portion and the information about the posture of the external display device which has been acquired.

4. The terminal device according to claim 3, wherein
the terminal posture detecting portion includes an acceleration sensor (13).

5. The terminal device according to claim 1, further comprising a communication portion (14) capable of transmitting the image signal to the external display device and capable of receiving a data signal containing the information about the posture from the external display device.

6. The terminal device according to claim 5, wherein
the communication portion is configured to be capable of transmitting and receiving the data signal containing the information about the posture and the image signal in a form of a signal of an MHL (Mobile High-Definition Link) standard.

7. The terminal device according to claim 1, wherein
the control portion is configured to perform control of transmitting the image signal according to a vertically long posture or a horizontally long posture of the external display device to the external display device.

8. The terminal device according to claim 1, wherein
the control portion is configured to perform control of acquiring a screen resolution of the external display device and transmitting the image signal according to the posture and the screen resolution of the external display device to the external display device on the basis of the information about the posture of the external display device and the screen resolution of the external display device which have been acquired.

9. The terminal device according to claim 1, wherein
the control portion is configured to perform control of synthesizing an adjustment image (122, 124) into an image transmitted to the external display device and transmitting the image signal of the image according to the posture of the external display device to the external display device when a posture of the terminal device and the posture of the external display device are different from each other.

10. The terminal device according to claim 1, including a portable information terminal.

11. A display device comprising:
a display device body portion (20a) including a display portion (12), capable of changing a posture; and
a notification portion (21) notifying an external terminal device (1) of information about the posture of the display device body portion in order for the external terminal device to transmit an image signal of an image according to the posture of the display device body portion.

12. The display device according to claim 11, wherein
the notification portion is configured to transmit the information about the posture according to a rotation posture of the display device body portion to the external terminal device.

13. The display device according to claim 11, further comprising a posture detecting portion (23) detecting the posture of the display device body portion, wherein
the notification portion is configured to transmit the information about the posture to the external terminal device on the basis of a detection result of the posture detecting portion.

14. The display device according to claim 13, wherein
the display device body portion is configured to be rotatable to be vertically long and horizontally long, and
the posture detecting portion includes a rotation detecting switch detecting a rotational position of the display device body portion.

15. The display device according to claim 11, further comprising a display device communication portion (24) capable of receiving the image signal of the image according to the posture of the display device body portion from the external terminal device.

16. A display system comprising:
a terminal device (1); and
a display device (2),
the display device including a display device body portion (20a) having a display portion (22), capable of changing a posture and a notification portion (21) notifying the terminal device of information about the posture of the display device body portion, and
the terminal device including a terminal display portion (12) and a control portion (11) performing control of transmitting an image signal of an image according to the posture of the display device body portion to the display device on the basis of the information about the posture of the display device body portion which has been acquired by notification from the display device.

17. The display system according to claim 16, wherein
the control portion is configured to perform control of transmitting the image signal of the image rotated according to a rotation posture of the display device body portion to the display device.

18. The display system according to claim 16, wherein
the terminal device further includes a terminal posture detecting portion (13) detecting a posture, and
the control portion is configured to perform control of transmitting the image signal of the image according to the posture of the terminal device and the posture of the display device body portion to the display device on the basis of a detection result of the terminal posture detecting portion and the information about the posture of the display device body portion which has been acquired.

19. The display system according to claim 16, wherein
the terminal device further includes a communication portion (14) capable of transmitting the image signal to the display device and capable of receiving a data signal containing the information about the posture from the display device.

20. The display system according to claim 19, wherein
the communication portion is configured to be capable of transmitting and receiving the data signal containing the information about the posture and the image signal in a form of a signal of an MHL (Mobile High-Definition Link) standard.
